# FASCICULE DE BREVET EUROPEEN

(11) **EP 3 643 876 B1**
(45) Date de publication et mention de la délivrance du brevet: **21.04.2021**
(21) Numéro de dépôt: 19204632.4
(22) Date de dépôt: 22.10.2019
(51) Int. Cl.: F01D 5/02, F02C 7/32, F02C 7/36, F16D 11/08, F16D 11/14, F16D 11/10, F16D 28/00, F16D 11/00

(54) **SYSTEME DE COUPLAGE/DECOUPLAGE DE BOITIERS D'ACCESSOIRES**
KOPPELUNGS-/ENTKOPPELUNGSSYSTEM VON ZUBEHÖRGEHÄUSEN
SYSTEM FOR COUPLING/UNCOUPLING OF BOXES OF ACCESSORIES

(30) Priorité: 22.10.2018 FR 1859738
(43) Date de publication de la demande: 29.04.2020
(73) Titulaire: Safran Transmission Systems, 92700 Colombes (FR)
(72) Inventeur: VIEL, Julien, 77550 MOISSY-CRAMAYEL (FR)
(74) Mandataire: Ernest Gutmann - Yves Plasseraud S.A.S.

(56) Documents cités:
- EP-A1- 2 199 573
- EP-A1- 2 957 500
- WO-A1-99/47799
- US-A- 4 569 427
- US-A1- 2010 283 341
- US-A1- 2016 356 378

## Description

### DOMAINE

La présente invention concerne un système de couplage/découplage pour coupler/découpler un moteur d'avion à un boitier d'accessoires d'un avion.

### CONTEXTE

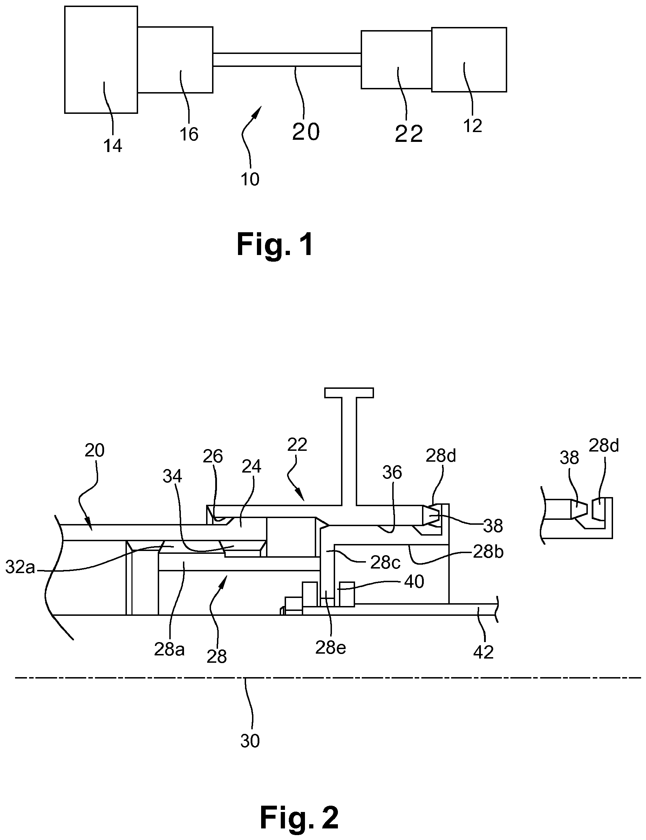

La figure 1 est un schéma fonctionnel d'une chaine mécanique 10 d'entrainement d'un boitier d'accessoires 12 d'un avion au moyen d'un moteur 14 de l'avion. Comme cela est connu, un tel système comprend ainsi un moteur 14 dont un arbre entraine en rotation les équipements d'un boitier d'accessoires 16 nécessaires au fonctionnement du moteur 14. Ce boitier d'accessoires 16 du moteur 14 est relié à un premier arbre 20 de transmission de puissance pouvant être couplé ou découplé en rotation d'un second arbre 22 relié à l'entrée d'un boitier d'accessoires 12 de l'avion. Lorsque le boitier d'accessoires 12 de l'avion est en position découplée du moteur 14 de l'avion, il peut ainsi être mis en fonctionnement par l'intermédiaire d'un moteur auxiliaire de puissance.

La nécessité de pouvoir réaliser un couplage ou un découplage s'explique de la manière suivante. En premier lieu, le couplage est nécessaire pour pouvoir démarrer le moteur puisque le démarreur est relié au boitier d'accessoires de l'avion. Le découplage est quant à lui nécessaire pour des opérations de maintenance du boitier d'accessoires de l'avion puisque l'on peut faire tourner le boitier d'accessoires 12 de l'avion avec le moteur 14 éteint et ainsi contrôler ses paramètres de fonctionnement. Il s'agit ici d'une opération relativement courante puisqu'elle intervient environ tous les dix vols. Egalement, un découplage est nécessaire en cas de panne du moteur en vol, le boitier d'accessoires 12 de l'avion peut continuer à assurer ses fonctions par l'intermédiaire du démarreur couplé alimenté par le moteur auxiliaire de puissance. Heureusement, cet évènement est rare et peut potentiellement se présenter une fois tous les mille vols.

Pour résumé, lorsque l'arbre de transmission de puissance ou premier arbre est couplé au second arbre ou arbre d'entrée du boitier d'accessoires 12 de l'avion, la puissance du démarreur peut être transmise à l'avion au démarrage et en vol le moteur peut transmettre de la puissance au boitier d'accessoires 12 de l'avion. En l'absence de couplage du premier arbre 20 et du second arbre, il n'y aucune transmission de puissance.

Dans un système connu, il a été proposé de réaliser le couplage et le découplage au moyen d'un mécanisme dont la puissance est fournie par un circuit hydraulique provenant d'un groupe de lubrification dont le fonctionnement est assuré par le boitier d'accessoires 12 de l'avion. Ce type de fonctionnement impose une liaison fluidique de fourniture de puissance provenant du boitier d'accessoires 12 de l'avion, ce qui peut poser des difficultés en cas de défaillance du groupe de lubrification.

L'invention a notamment pour but d'apporter une solution simple, efficace et économique à ce problème.

### RESUME DE L'INVENTION

Le présent document concerne un système de couplage pour coupler/découpler un moteur d'un avion à un boitier d'accessoires de l'avion, comprenant un premier arbre destiné à être relié au boitier d'accessoires du moteur et à l'intérieur duquel est monté à coulissement un coulisseau portant des premiers moyens de couplage aptes à coopérer avec des seconds moyens de couplage portés par un second arbre destiné à être relié au boitier d'accessoires de l'avion de manière à coupler le premier et le second arbre en rotation, dans lequel il comprend en outre des moyens électriques de déplacement du coulisseau le long de l'axe du premier arbre entre une première position dans laquelle les premiers moyens de couplage ne sont pas accouplés aux seconds moyens de couplage et une seconde position dans laquelle les premiers moyens de couplage sont accouplés aux seconds moyens de couplage.

Ainsi, le boitier d'accessoires de l'avion et le boitier d'accessoires du moteur de l'avion peuvent être couplés et découplés l'un de l'autre indépendamment de toute fourniture de puissance en provenance du boitier d'accessoires de l'avion ou bien du boitier d'accessoires du moteur. Les moyens électriques de déplacement seront reliés au circuit électrique de l'avion et pourront être actionnés depuis un poste de pilotage de l'avion. Ces moyens électriques seront dimensionnés en termes de puissance de manière à permettre un découplage des premier et second arbres alors que ceux-ci sont en prise l'un avec l'autre. Le système selon l'invention confrère également une certaine compacité puisque le coulisseau est monté à l'intérieur du premier arbre. Les moyens électriques de déplacement du coulisseau peuvent par exemple être formés par un vérin électrique. La conception du système selon l'invention permet de n'utiliser qu'un faible nombre de pièces, ce qui s'avère plus simple à concevoir.

Le vérin électrique peut être un vérin à double sens permet l'engagement et le désengagement des moyens de couplage. Il pourra également être prévu des moyens de déplacement manuel du coulisseau permettant de palier une défaillance des moyens électriques de déplacement.

Les moyens électriques sont également dimensionnés pour permettre le recouplage à l'arrêt. Egalement, le premier arbre comprend une portée cylindrique centrée dans une surface cylindrique interne du second arbre.

Le coulisseau peut être centrée à la fois dans le premier arbre et dans le second arbre, ce qui assure une coaxialité entre le premier arbre et le second arbre. Dans ce cas, le coulisseau peut comprendre une première partie cylindrique montée dans le premier arbre, accouplée en rotation avec celui-ci et reliée à une seconde partie cylindrique centrée dans une surface cylindrique du second arbre.

Dans l'agencement précédemment décrit, la portée cylindrique de centrage du premier arbre dans le second arbre est intercalée radialement entre la première partie cylindrique du coulisseau et le second arbre, ce qui permet encore d'améliorer la coaxialité entre le premier arbre, le second arbre et le coulisseau.

Les premiers moyens de couplage peuvent être formés à une extrémité de la seconde partie cylindrique opposée à celle reliée à la première partie.

Le coulisseau peut comprendre un doigt radial dont une extrémité radialement interne est montée à glissement circonférentiel dans un logement d'une tige apte à se déplacer axialement et reliée aux moyens électriques.

Les premiers moyens de couplage peuvent comprendre des premiers crabots portés par une extrémité du coulisseau et aptes à coopérer avec des seconds crabots des seconds moyens de couplage du second arbre. Les faces en contact des crabots ont avantageusement des formes évitant/limitant le désengagement des premiers et seconds moyens de couplage. Ainsi, si un découplage en vol a lieu en cas de panne du moteur, il y a inversion du couple transmis (le moteur ne transmet plus de couple vers le boitier) entre les moyens de crabotage, ce qui permet d'inverser les efforts sur les formes anti dégagements et ainsi permettre le désengagement. En revanche, la présence de forme complémentaires anti désengagement sur les crabots permet de rendre difficile le désengagement des crabots entre eux si le moteur fonctionne toujours et transmet du couple. Les efforts de l'actionneur électrique doivent vaincre ceux des formes assurant le désengagement qui peuvent être très élevées.

L'invention concerne également un système du type précité et un boîtier d'accessoires d'un moteur relié au premier arbre et un boîtier d'accessoires d'un avion relié au second arbre.

L'invention concerne encore un avion comprenant un système tel que décrit ci-dessus et au moins un moteur à réaction dont un rotor de compresseur est relié au premier arbre.

L'invention sera mieux comprise et d'autres détails, caractéristiques et avantages de l'invention apparaîtront à la lecture de la description suivante faite à titre d'exemple non limitatif en référence aux dessins annexés.

### BREVE DESCRIPTION DES FIGURES

- La figure 1 déjà décrite précédemment est un schéma fonctionnel d'une chaine mécanique d'entrainement d'un boitier d'accessoires d'un avion au moyen d'un moteur de l'avion ;
- La figure 2 est une vue schématique en coupe d'un système de couplage/découplage selon l'invention.

### DESCRIPTION DETAILLEE

On se réfère maintenant à la figure 2 qui représente un système de couplage/découplage selon l'invention destiné à être utilisé dans une chaine mécanique 10 comme décrite en référence à la figure 1.

Le système comprend ainsi un premier arbre 20 relié au boitier d'accessoires 16 du moteur 14 de l'avion et un second arbre 22 coaxial au premier arbre 20 et relié au boitier d'accessoires de l'avion. Le premier arbre 20 comprend une portée cylindrique 24 formée à une extrémité de celui-ci et engagée dans une extrémité du second arbre 22. Cette portée cylindrique 24 est en appui radialement vers l'extérieur sur une surface cylindrique 26 interne du second arbre 22 afin d'assurer un centrage du premier arbre 20 dans le second arbre 22. Le contact est réalisé à glissement circonférentiel afin que le premier arbre 20 puisse tourner indépendamment du second arbre 22 en l'absence de couplage en rotation des deux arbres 20, 22.

Un coulisseau 28 comprend une première partie cylindrique 28a coopérant à glissement axial, c'est-à-dire selon l'axe 30 du premier arbre 20, dans le premier arbre 20. Pour cela, la première partie cylindrique 28a du coulisseau 28 comprend des cannelures axiales 32a coopérant avec des cannelures axiales 34 formées à l'intérieur du premier arbre 20. La première partie 28a du coulisseau 28 est reliée à une seconde partie 28b sensiblement cylindrique par l'intermédiaire d'un épaulement annulaire 28c. Cette seconde partie 28b est en appui à glissement circonférentiel sur une surface cylindrique interne 36 du second arbre 22 de manière à assurer un centrage du coulisseau 28 dans le second arbre 22.

Egalement, l'extrémité de la seconde partie 28b du coulisseau 28 porte des premiers moyens de couplage formés par des crabots 28d qui sont aptes à coopérer avec des seconds moyens de couplage formés aussi par des crabots 38. Les seconds moyens de couplage sont formés à une extrémité du second arbre 22 opposée à celle à l'intérieur de laquelle est centrée le premier arbre 20.

Le coulisseau 28 comprend un doigt radial 28e s'étendant radialement vers l'intérieur et prolongeant dans ce sens l'épaulement annulaire 28c. L'extrémité radialement interne du doigt 28e est engagée à glissement circonférentiel dans un logement 40 formé à l'extrémité d'une tige 42. Ce doigt est apte à glisser circonférentiellement dans ledit logement 40. Dans le cas d'espèce représenté en figure 2, le logement 40 annulaire ou circonférentiel est formé à l'extrémité d'une tige 42 qui peut être celle d'un vérin électrique formant ainsi les moyens de déplacement électrique du coulisseau 28. Ainsi, l'actionnement du vérin permet le déplacement et par suite le déplacement de la tige 42 permet le déplacement axial du coulisseau 28 entre une première position dans laquelle les premiers moyens de crabotage 28d sont agencés à distance des seconds moyens de crabotage 38, le premier arbre 20 et le second arbre 22 n'étant alors par accouplés et une seconde position dans laquelle les premier crabots 28d et seconds crabots 38 sont en prises et assure un couplage en rotation du premier arbre 20 et du second arbre 22 par l'intermédiaire du coulisseau 28.

Dans une autre réalisation non représentée, il serait possible d'utiliser un palier de roulement pour réaliser le déplacement du coulisseau 28 au lieu d'un logement 40 comme décrit ci-dessus. Dans ce cas, l'extrémité radialement interne du doigt 28e serait fixée à une bague externe du palier et la bague interne serait fixée à la tige 42.

## Revendications

1. Système de couplage pour coupler/découpler un boitier d'accessoires (16) du moteur (14) d'un avion à un boitier d'accessoires (12) de l'avion, comprenant un premier arbre (20) destiné à être relié au boitier d'accessoires du moteur et à l'intérieur duquel est monté à coulissement un coulisseau (28) portant des premiers moyens (28d) de couplage aptes à coopérer avec des seconds moyens (38) de couplage portés par un second arbre (22) destiné à être relié au boitier d'accessoires (12) de l'avion de manière à coupler le premier (20) et le second (22) arbre en rotation, dans lequel il comprend en outre des moyens électriques de déplacement du coulisseau (28) le long de l'axe (30) du premier arbre (20) entre une première position dans laquelle les premiers moyens de couplage (28d) ne sont pas accouplés aux seconds moyens (38) de couplage et une seconde position dans laquelle les premiers moyens de couplage (28d) sont accouplés aux seconds moyens de couplage (38), le premier arbre (20) comprenant une portée cylindrique (24) centrée dans une surface cylindrique interne du second arbre (22) et le coulisseau (28) comprenant une première partie (28a) cylindrique montée dans le premier arbre (20), accouplée en rotation avec celui-ci et reliée à une seconde partie (28b) cylindrique centrée dans une surface cylindrique du second arbre (22).

2. Système selon la revendication 1, dans lequel les premiers moyens de couplage (28d) sont formés à une extrémité de la seconde partie cylindrique (28b) opposée à celle reliée à la première partie (28a).

3. Système selon l'une des revendications 1 à 2, dans lequel le coulisseau (28) comprend un doigt (28e) radial dont une extrémité radialement interne est montée à glissement circonférentiel dans un logement d'une tige (42) apte à se déplacer axialement et reliée aux moyens électriques.

4. Système selon l'une des revendications 1 à 3, dans lequel les premiers moyens de couplage comprennent des premiers crabots (28d) portés par une extrémité du coulisseau (28) et aptes à coopérer avec des seconds crabots (38) des seconds moyens de couplage du second arbre (22).

5. Ensemble comprenant un système selon l'une des revendications précédentes et un boîtier d'accessoires d'un moteur relié au premier arbre (24a, 24b, 24c) et un boîtier d'accessoires d'un avion relié au second arbre.

## Patentansprüche

1. Koppelungssystem zum Ankoppeln/Abkoppeln eines Zubehörgehäuses (16) des Motors (14) eines Flugzeugs mit/von einem Zubehörgehäuse (12) des Flugzeugs, enthaltend eine erste Welle (20), die dazu bestimmt ist, mit dem Zubehörgehäuse des Motors verbunden zu werden und in deren Innerem ein Schieber (28) gleitbeweglich gelagert ist, der erste Kopplungsmittel (28d) trägt, die mit zweiten Kopplungsmitteln (38) zusammenwirken können, die von einer zweiten Welle (22) getragen werden, die dazu bestimmt ist, mit dem Zubehörgehäuse (12) des Flugzeugs verbunden zu werden, um die erste (20) und die zweite (22) Welle drehfest miteinander zu koppeln,
wobei es ferner elektrische Mittel zum Verschieben des Schiebers (28) entlang der Achse (30) der ersten Welle (20) zwischen einer ersten Position, in der die ersten Kopplungsmittel (28d) nicht mit den zweiten Kopplungsmitteln (38) gekoppelt sind, und einer zweiten Position, in der die ersten Kopplungsmittel (28d) mit den zweiten Kopplungsmitteln (38) gekoppelt ist, enthält, wobei die erste Welle (20) eine zylindrische Lagerung (24) enthält, die in einer zylindrischen Innenfläche der zweiten Welle (22) zentriert ist, und wobei der Schieber (28) einen ersten zylindrischen Abschnitt (28a) aufweist, der in der ersten Welle (20) gelagert und drehfest mit dieser gekoppelt und mit einem zweiten zylindrischen Abschnitt (28b) verbunden ist, der in einer zylindrischen Fläche der zweiten Welle (22) zentriert ist.

2. System nach Anspruch 1, wobei die ersten Kopplungsmittel (28d) an einem Ende des zweiten zylindrischen Abschnitts (28b) ausgebildet sind, das demjenigen entgegengesetzt ist, das mit dem ersten Abschnitt (28a) verbunden ist.

3. System nach einem der Ansprüche 1 bis 2,
wobei der Schieber (28) einen radialen Stift (28e) aufweist, dessen radial inneres Ende in einer Aufnahme einer axial verschiebbaren und mit den elektrischen Mitteln verbundenen Stange (42) in Umfangsrichtung gleitbeweglich gelagert ist.

4. System nach einem der Ansprüche 1 bis 3,
wobei die ersten Kopplungsmittel erste Klauen (28d) aufweisen, die von einem Ende des Schiebers (28) getragen werden und mit zweiten Klauen (38) der zweiten Kopplungsmittel der zweiten Welle (22) zusammenwirken können.

5. Anordnung mit einem System nach einem der vorhergehenden Ansprüche und einem mit der ersten Welle (24a, 24b, 24c) verbundenen Zubehörgehäuse eines Motors und einem mit der zweiten Welle verbundenen Zubehörgehäuse eines Flugzeugs.

## Claims

1. A coupling system for coupling/decoupling an accessory box (16) of an aircraft engine (14) to an accessory box (12) of the aircraft, comprising a first shaft (20) intended to be connected to the engine accessory box and inside which is slidably mounted a slide (28) carrying first coupling means (28d) capable of cooperating with second coupling means (38) carried by a second shaft (22) intended to be connected to the aircraft accessory box (12) in order to couple the first (20) and the second (22) rotating shaft, wherein it further comprises electrical means for moving the slide (28) along the axis (30) of the first shaft (20) between a first position in which the first coupling means (28d) are not coupled to the second coupling means (38) and a second position in which the first coupling means (28d) are coupled to the second coupling means (38), the first shaft (20) comprising a cylindrical bearing (24) centred in an inner cylindrical surface of the second shaft (22) and the slide (28) comprising a first cylindrical portion (28a) mounted in the first shaft (20), rotatably coupled thereto and connected to a second cylindrical portion (28b) centered in a cylindrical surface of the second shaft (22).

2. A system according to claim 1, wherein the first coupling means (28d) are formed at one end of the second cylindrical part (28b) opposite that connected to the first part (28a).

3. A system according to one of claims 1 to 2, wherein the slide (28) comprises a radial finger (28e) having a radially inner end mounted circumferential sliding in a housing of an axially movable rod (42) able to axially move and connected to the electrical means.

4. A system according to one of claims 1 to 3, wherein the first coupling means comprise first pawls (28d) carried by one end of the slide (28) and adapted to cooperate with second pawls (38) of the second coupling means of the second shaft (22).

5. An assembly comprising a system according to one of the preceding claims and an accessory box of an engine connected to the first shaft (24a, 24b, 24c) and an accessory box of an aircraft connected to the second shaft.
